# EUROPEAN PATENT APPLICATION

(11) **EP 1 962 310 A1**
(43) Date of publication of application: **27.08.2008**
(21) Application number: 07003867.4
(22) Date of filing: 26.02.2007
(51) Int. Cl.: H01H 3/26, H01H 3/30, H01H 3/46

(54) **Power line switch device with piezo-electric actuation**

(71) Applicant: KAMSTRUP A/S, 8660 Skanderborg (DK)
(72) Inventor: Drachmann, Jens, 8260 Viby J (DK); Skallebæk, Anders, 8660 Skanderborg (DK)
(74) Representative: Plougmann & Vingtoft A/S

(57) **Abstract**

The invention provides a power line switch device (1) for disconnecting an electric power line (2) in response to a control signal (CS), e.g. to enable remote breaking of electric power supply to a consumer connected to an electric supply net. The switch device (1) includes a power switch for connecting or breaking connection of an electric power line. A switch member serving to switch the power switch between "on" and "off" is actuated by a piezo-electric motor (5) in response to the control signal (CS). A piezo-electric motor can be implemented immune to magnetic fields and is thus suited to provide mechanical energy to reliably drive a power switch in an environment where application of a strong magnetic field may be used to disturb the function of such switch. In preferred embodiments the piezo-electric motor actuates the switch member via a mechanical coupling arrangement (7). This arrangement (7) serves to convert a slow movement provided by the plezo-electric motor (5) to a snap-like movement of the switch member such that contact members (8, 9) are quickly brought in or our of contact thereby eliminating sparks between the contact members (8, 9). Preferably the actuation of the switch member (4) Involves a plurality of repeated movements of the piezo-electric motor (5).

## Description

### Field of the invention

The invention relates to the field of electric switch devices, especially for switches to disconnect a power line, e.g. a power line in an electric energy supply net. More specifically, the invention provides a power line switch device actuated with a piezo-etectric actuator, especially a piezo-electric motor. Further, the invention provides an electric consumption meter and an electric supply system.

### Background of the invention

In an electric energy distribution net supplying energy to a number of consumers, the electric energy provider needs to be able to disconnect the power line to individual consumers for a short or long period of time, e.g. in case a consumer does not pay the charges to the electric energy provider, or to shutdown consumers in a prioritized order In case of power shortage in the power distribution network. In order to disconnect a consumer, it has been common to send an operator to the consumer and manually disconnect the power line to the consumer. However, this is an inconvenient and expensive solution.

Thus, different solutions exist to remotely disconnect the power line to a consumer. E.g. power relay for disconnecting the power line can be mounted in connection with the consumer's electric consumption meter, wherein the power relay is wirelessly controllable or controllable via a high frequency control signal transmitted via the power line. With such solutions, the provider can disconnect and re-connect the consumer in an easy way. However, normal power relays are based on electromagnetic actuation. Therefore, if the relay is mounted such that it is available for the consumer, e.g. if mounted inside the consumer's electric consumption meter, such relay suffers from malfunction in case it is exposed to a strong magnetic field. Thus, it is possible for a consumer to block the relay such that it is impossible for the provider to disconnect his power line by applying a strong magnet close to the relay. In some cases it might even be possible for the consumer to change the state of a traditional electromagnetic relay with a strong external magnet.

Relay devices exist that are capable of switching by applying an electrical DC voltage to a bi-morph material attached to a contact member to move it from one position to another and thereby either provide a switch function. E.g. such bi-morph relays may be based on piezo-electric material and can thus be manufactured in magnetically immune materials. Bi-morph relays are suitable for use as switches in low power applications, but they have a number of disadvantages for switching of high power signals at high voltages. In general, bi-morph relays only provide a small movement of the contact member which does not provide a mutual distance between contact members which is large enough to avoid sparks that will cause an unreliable switch function during time. Furthermore, in order to provide an acceptably large movement, an inconveniently high DC voltage is required.

Therefore, there is a need for a power line switch device capable of functioning reliably in a strong magnetic field. For application within high power switching, a preferred distance of at least 0.5 mm between the contact members in a disconnected state of the switch is required in order to avoid the risk of sparks between the contact members and resulting damage of the contact members which will lead to an unreliable function of the switch.

### Summary of the invention

Thus, according to the above explanation, it is an object of the present invention to provide a power line switch device capable of functioning in a strong magnetic field and still be able to provide a reliable switch function. Further, it is desirable that the switch device can operate with a low voltage drive signal.

This object is obtained in a first aspect of the invention providing a power line switch device for disconnecting an electric power line in response to a control signal, the device comprising
- a switch arranged for connecting the electric power line in a first state and for disconnecting the electric power line in a second state, wherein the switch Is arranged to switch between the first and second states upon actuation of a switch member, and
- a piezo-electric motor operationally arranged to actuate the switch member in response to the control signal.

By a 'piezo-electric motor' is understood a mechanical actuator converting electrical energy in an electrical drive signal to a mechanic motion by means of one or more piezo-electric elements. Such motors are commercially available in a large variety of different arrangements providing linear motions, rotational motions or combined linear and rotational motions based on the electric drive signal.

By using a piezo-electric motor it is possible to provide a large distance between contact members of the switch even by a rather weak motor requiring only a low voltage drive signal. This can especially be obtained in embodiments where the piezo-electric motor is mechanically arranged in relation to the switch member such that actuation of the switch member involves a plurality of repeated movements of at least one part of the power line switch device. E.g. actuation of the switch member may involve at least one part of the piezo-electric motor performing a plurality of repeated movements, preferably at least 10 repeated movements, more preferably at least 100 repeated movements, and even thousands of repeated movements may be Involved to actuate the switch member. As a simple example of such repeated or cyclic movements, a rotating plezo-electric motor may actuate the switch member via a toothed wheel gear mechanism such that a plurality of full rotations of the piezo-electric motor is required to actuate the switch member and thus cause the switch to change state.

With a switch device using a piezo-electric motor, i.e. a non-magnetic actuator, the switch device can be implemented generally immune to magnetic field. Using a piezo-electric motor, it is possible to provide enough mechanical energy to actuate the switch fast enough and provide sufficient distance between contact members of the switch to allow reliable use in power line applications. This is even possible with low voltage (below 25 V) drive signals to the piezo-electric motor that are easy to handle. A further advantage of the switch device is that piezo-electric motors suitable for this purpose, including driver circuits, are commercially available and are small in size.

Preferably, the device includes a drive circuit arranged to generate a drive signal to drive the piezo-electric motor in response to the control signal, the drive circuit is preferably arranged to provide a drive signal including an AC signal. Especially, a direction of movement (e.g. forth, back) of the piezo-electric motor may be controlled in response to one or both of phase and frequency of the AC signal. Preferably, the drive signal has an amplitude of less than 25 V, preferably less than 20 V, preferably less than 3.0 V, may be even lower.

The piezo-electric motor may include at least two piezo-electric elements, and wherein the drive circuit is arranged to provide separate drive signals to the at least two piezo-electric elements. The piezo-electric motor may include at least two groups each including a plurality of piezo-electric elements, and wherein the drive circuit is arranged to provide separate drive signals to the at least two groups of piezo-electric elements. Typically, commercially available piezo-electric motors Include a plurality of individually controlled piezo-electric elements interacting to perform the combined motion of the piezo-electric motor. The motion performed by the piezo-electric motor may be rotational, translational (linear) or a combined rotational and translational motion.

In preferred embodiments, the piezo-electric motor is arranged to actuate the switch member via a mechanical coupling arrangement serving to convert a motion generated by the piezo-electrlc motor to a movement of the switch member, especially it is preferred that the mechanical coupling arrangement serves to move the switch member faster than the movement generated by the piezo-electric motor. Hereby, it is possible to provide a fast switch from one state to the other, thus minimizing the risk of sparks that may damage contact elements of the switch. This may be obtained by including a mechanical energy storage arrangement serving to collect mechanical energy produced by the piezo-electric motor and to the release the collected mechanical energy. Especially the energy storage arrangement may include a spring.

Preferably at least one part of such mechanical coupling arrangement performs a plurality of repeated movements, e.g. rotations, to actuate the switch member. The number of such repeated movements may be at least 10, at least 100 or even thousands.

In some embodiments, the mechanical coupling arrangement includes a mechanical energy storing arrangement, e.g. including a spring, and arranged such that the motor generates mechanical energy for storing just after actuation of the switch member has taken place. Thus, mechanical energy is stored for quickly release and actuation of the switch member after the control signal has been received. In this way a small and weak motor can be used that builds up mechanical energy for storage over a period of such as 1 second, 10 second or even longer, while still change of switch state can be performed quickly in response to the control signal.

By 'power line' is understood a supply line for electric energy involving supply of high power electric energy, such as involving voltages of 100 V or more and currents of 10 A or more. E.g. the electric power line may be an electric energy supply line to a dwelling or an enterprise. Thus, in order to handle high power electric signals, the switch preferably has an electric resistance in the first switch state which is low enough to provide a low heat dissipation in contact members of the switch, preferably this contact resistance is less than 1 mΩ, preferably less than 200 µΩ. To avoid damage risks due to sparks, contact members in the switch are preferably arranged to have a mutual distance of at least 0.5 mm in the second state. Preferably the distance is at least 1 mm, such as at least 2 mm, such as at least 3 mm.

To further eliminate any magnetic influence of the function, the switch device may be implemented by non-magnetic materials.

In some embodiments of the switch device the piezo-electric motor can move in two directions, e.g. rotation clockwise and anti-clockwise, or forth and back movement in case of a translational piezo-electric motor. Especially, the piezo-electric motor may be capable of actuating the switch member in a first movement direction so as to switch from the first state to the second state, and further capable of actuating the switch member in a second movement direction so as to switch from the second state to the first state. With such bi-directional piezo-electric motor, it is possible to connect and disconnect the power line using only one motor. Alternatively, two motors may be used to respectively disconnect and connect.

In some embodiments, the switch device is arranged to disconnect a plurality of electric phases of the power line in response to the control signal. This may be obtained by including a plurality of switches arranged to disconnect respective electric phases of the power line. Especially, the plurality of switches may be operated by one common piezo-electric motor, alternatively, the plurality of switches are operated by respective piezo-electric motors. Further, the switch device may optionally be arranged to disconnect a neutral conductor of the power line (i.e. electric earth or return path) in response to the control signal. In case of such multi-phase switch devices it may be preferred to disconnect and/or connect the phases at different times, e.g. separated by one or a few ms, or e.g. separated by such as one second. Such temporal different actuation of a plurality of switches may be obtained electronically, by providing different sub-control signals to the plurality of switches in response to the control signal. Alternatively, the switch device may be arranged to actuate the switches in different order via mechanical different actuation arrangements, e.g. by one piezo-electric motor being arranged to actuate one power switch for each electric phase via a mechanical coupling arrangement serving to actuate the power switches in a predetermined temporal order.

A feedback signal representing the state of the switch may be applied to a drive circuit controlling the actuator in response to the control signal. Thus, the drive circuit can operate the piezo-electric motor according to such feedback signal to ensure that the switch is in the state requested by the control signal. The feedback signal can be based on either one or both of: 1) a direct detection, such as an electric measurement performed on the power line, e.g. measurement of a voltage between neutral and one phase at a position of the power line after the switch, and hereby directly detect if the power line has been disconnected or not, and 2) an indirect detection, such as detection of a position of a mechanical part of the switch, e.g. the switch member, or a part connected thereto. The feedback signal can then be applied to the drive circuit controlling the actuator in response to the control signal. Thus, the feedback signal can be used by the drive circuit to control the actuator, e.g. cut off the drive signal, once the feedback signal indicates that the switch has reached the desired state.

In embodiments where the feedback signal is provided based on an indirect detection of the state of the switch, by detecting a position of a mechanical part of the switch, the feedback signal can be obtained in a large variety of ways. E.g. the feedback signal may be provided by an electrical measurement on a separate switch, e.g. a miniature low power switch, mechanically connected to the switch member such that its switch state reflects the switch state of the power line switch. More alternatively, the feedback signal may be provided on the basis of measurements on a variable capacitor mechanically connected to reflect the switch state of the power line switch. More alternatively, the feedback signal may be provided based on a variable Inductor mechanically connected to reflect the switch state of the power line switch. More alternatively, the feedback signal may be provided based on a variable resistor mechanically connected to reflect the switch state of the power line switch. Still further alternatively, the feedback signal may be provided by optical sensing of the switch state of the power line switch, e.g. using a photo-interrupter or a photo-reflector.

In order to provide a remote operation, the switch device preferably comprises a communication module arranged to receive the control signal from an associated external transmitter. The communication module may include a wireless Radio Frequency receiver arranged to receive the control signal in a wireless representation. Alternatively, or additionally, the communication module is arranged to receive the control signal via the electric power line, and/or via a dedicated communication wire.

The power line switch device are advantageous over traditional power line switches since, compared to the overall dimensions of the switch device, a large mechanical force can be provided to press contact members of the switch together in its "on" state. Hereby, it is possible to obtain a low contact resistance in the switch and a high reliability of the switch function since a large contact force serves to reduce influence of possible non-conductive particles on the switch contact surfaces, such as dirt or coatings on the contact surfaces caused by sparks. These advantages are especially pronounced for embodiments where one or both of motor and mechanical coupling arrangement performs a plurality repeated movements to actuate the switch member.

In a second aspect, the invention provides an electric consumption meter for measuring an amount of electrical energy delivered by an electric power line, the meter comprising a measuring device arranged to measure the amount of electric energy delivered by the electric power line and generate an according data value representing the amount of electric energy, and a power line switch device according to the first aspect.

The meter may further comprise a casing for housing the measuring device and the power line switch device. Further, the meter may comprise a power supply delivering electric power for operation of the measuring device and the power line switch device.

The meter may comprise a communication module arranged to receive the control signal from an associated external transmitter. The communication module may include a wireless Radio Frequency receiver. The communication module may further include a wireless Radio Frequency transmitter arranged to transmit the data value representing the amount of electric energy. Further, the communication module may be arranged to communicate via the electric power line, and/or via a dedicated communication wire.

The measuring device of the meter may be arranged to measure a total amount of electric energy delivered by two or more electric phases of the power line, and the power line switch device may be arranged to disconnect the two or more electric phases of the power line in response to the control signal. The power line switch device may further be arranged to disconnect a neutral conductor of the power line.

In a third aspect, the invention provides a supply system for supply of electric energy to a plurality of associated consumers via a net of electric power lines, the system including a plurality of power line switch devices according to the first aspect arranged to disconnect respective electric power lines supplying electric energy to each of the associated consumers upon receiving respective control signals, and a transmitter arranged to transmit respective control signals to the plurality of power line switch devices so as to disconnect electric energy supply to the respective associated consumers.

The transmitter may be arranged to transmit the respective control signals in a wireless Radio Frequency representation, and wherein the plurality of power line switch devices Include communication modules arranged to receive the respective control signals in the wireless Radio Frequency representation. Alternatively or additionally, the transmitter is arranged to transmit the respective control signals via the net of electric power lines, and wherein the plurality of power line switch devices include communication modules arranged to receive the respective control signals via the net of electric power lines. Still further, the communication may alternatively or additionally take place via a dedicated wired communication network.

The system may alternatively or additionally include a plurality of electric consumption meters according to the second aspect.

It is appreciated that any sub aspect mentioned in connection with the first aspect may in any way be combined with any of the second and third aspects and with any of the sub aspects mentioned in connection therewith.

### Brief description of drawings

In the following, the invention will be described in more details by referring to embodiments illustrated in the accompanying drawings, of which
Fig. 1 illustrates elements of a preferred power line switch device,
Fig. 2 illustrates elements of a preferred electric consumption meter,
Fig. 3 illustrates elements of a preferred electric supply system, and
Figs. 4a-4c illustrate different views of selected parts of a switch device embodiment showing a piezo-electric motor element providing a rotational engagement of a mechanical coupling arrangement with mechanical energy storing plate springs, and
Fig. 5 illustrates selected parts of another switch device embodiment with a piezo-electric motor element providing a translational engagement of a mechanical coupling arrangement with mechanical energy storing springs.

### Detailed description of the invention

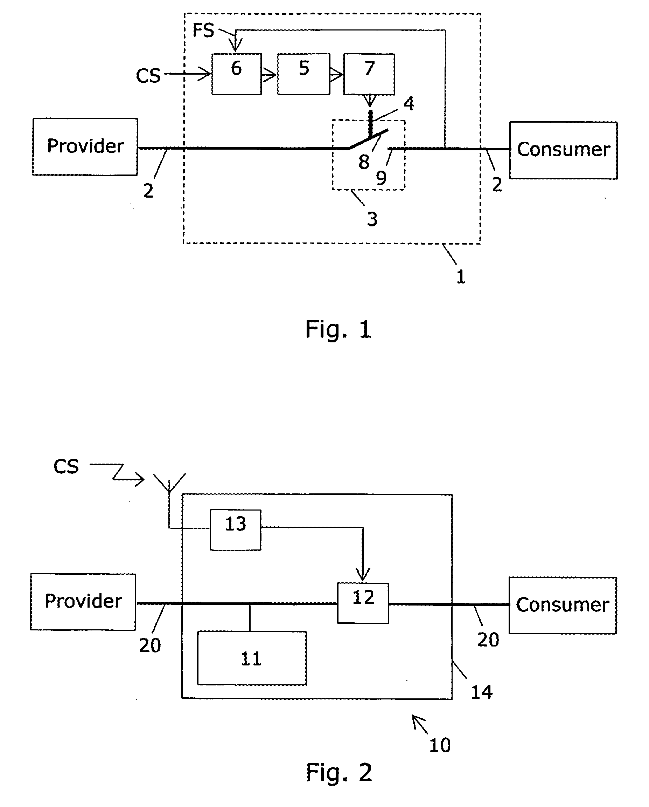

Fig. 1 Illustrates schematic elements of a preferred power line switch device 1. The switch device 1 is shown inserted in an electric power line 2 connecting an electrical energy provider and a consumer. The switch device 1 is arranged to receive a control signal CS, e.g. sent from the provider, and to disconnect the power line 2 in response to the control signal CS, thus breaking the supply of electric power to the consumer.

The switch device 1 includes an electric switch 3 with contact members 8, 9, the switch 3 being inserted in the power line 2 so as to break the electric supply to the consumer when the control signal CS is received. The switch 3 is a two-state switch, i.e. it can be in an "on" state where the contact members 8, 9 establish electrical contact, and an "off" state where the contact members 8, 9 disconnect the electrical contact. The switch 3 state is changed by moving a switch member 4 from one position to another, thus serving to engage with the contact member 8, 9 so as to a change switch state. E.g. the switch member 4 may be in direct mechanical connection with one switch member 8 as illustrated in Fig. 1, or the switch member 4 may be an integrated part of the switch member 8. In general, any type of switch 3 may be used, provided it is capable of handling the electric power required by the particular consumer.

A piezo-electric motor 5 serves as actuator for the switch 3, i.e. the piezo-electric motor 5 actuates the switch member 4 and thus causing the switch 3 to change switch state. In general, the piezo-electric motor 5 may actuate the switch member 4 directly, or it may actuate the switch member 4 indirectly via a mechanical converter 7 as illustrated in Fig. 1, The mechanical converter 7 serves to convert a motion of the piezo-electric motor to a motion required to move the switch member 4 to change switch state. E.g. the mechanical converter 7 may be arranged to convert a rotational motion of the motor 5 to a required translational movement of the switch member 4 to cause a change of switch state. Especially, it Is preferred that the mechanical converter 7 is capable of storing mechanic energy produced by the motor 5 and release it in a fast movement so as to ensure that a rather weak motor 5 can produce mechanic energy to provide a fast actuation of the contact members 8, 9 without the risk of causing any sparks between the contact members 8, 9 due to their mutual distance being too small.

I Fig. 1 the piezo-electric motor 5 is driven by a drive circuit 6 that receives the control signal CS and generates an electric drive signal causing the motor 5 to actuate the switch 3. Preferably, the drive circuit 6 is capable of receiving both an "on" and "off" control signal CS, and preferably the motor 5 can operate bi-directionally such that it can move in one direction to actuate the switch 3 to "on" state and in the opposite direction to actuate the switch 3 to "off" state. Most often the drive circuit 6 is dedicated to the specific piezo-electric motor 5 type, since the drive signals must be specifically suited to the mechanic structure of the motor 5. The drive signals are normally AC signals, and one or both of frequency and phase of the AC signals are used as parameters for controlling direction of motion of the motor 5.

An optional feedback signal FS is used to sense if the power line 2 to the consumer is actually connected or not, i.e. to Indirectly indicate if the power switch 3 is "on" or "off". Thus, such feedback signal FS allows the drive circuit 6 to operate the motor 5 in response to an actual state of the switch 3, e.g. cut off the drive signal once the desired switch state is obtained. Such feedback signal FS may be used for operation of the drive circuit 6 both in case of a uni-directional motor 5 and a bi-directional motor 5. In Fig. 1 the feedback signal FS is taken from the power line 2 on the consumer side of the switch 3, the feedback signal FS may also be obtained as a voltage across the switch 3, i.e. the drive circuit 6 may use a voltage difference across the switch 3 as feedback signal FS indicating the actual state of the switch 3.

It is appreciated that such feedback signal FS indicating the state of the switch 3 may be obtained in a large variety of ways, including direct a low voltage signal applied to an additional low voltage switch arranged to mechanically sense the actual state of the power switch 3, e.g. the low voltage switch may be mechanical contact positioned to change state in response to the contact member 4 moves from one state to the other. If power switches 3 are mounted on each electrical phase of the power line 2, separate feedback signals FS indicating the state of each power switch 3 may be provided, e.g. also including a feedback signal FS indicating the state of a power switch 3 for the neutral conductor. It may be preferred to transmit the feedback signal FS to the provider in order to indicate if the switch device 1 has responded property to the control signal CS, and if not, the provider can take action accordingly. E.g. the switch device 1 may be damaged and is therefore not able to disconnect the power line 2, with the feedback signal FS the provider is informed that the switch device 1 has not responded properly and can take according action.

In case the switch device is used in connection with an electric meter, the feedback signal FS may be indirectly applied to the drive circuit 6, e.g. via a central microprocessor controlling the electric meter. Still further, the drive circuit 6 may share power supply with measuring circuits of the electric meter, and the drive circuit 6 may even be completely integrated with the electronic circuits of the electric meter.

In some embodiments. e.g. for use in electric consumption meters, it may be preferred to use a uni-directional piezo-electric motor, i.e. a motor configured for one movement direction, preferably combined with the above-mentioned feedback signal FS. Such uni-directional motor can be implemented with a simple drive circuit. However, in case such feedback Is not Implemented, it may be preferred to provide embodiments of the switch device with a bi-directional motor where a first motor direction changes the switch state from the first to the second state, while a second motor direction changes the switch state from the second to the first direction.

It is preferred that the provider can send the control signal CS to disconnect a consumer power line remotely. This can be obtained by communication of the control signal wirelessly, by a dedicated wire or wired via the power line, e.g. as a low level high frequency signal overlaid the power voltage.

The piezo-electric motor 5, the mechanical arrangement 7 and the switch 3 may be implemented such that they form one integrated unit, e.g. housed within one common casing. The drive circuit 6 may further be included in the integrated unit.

Many different types of piezo-electric motors suited for the present invention are commercially available. A few examples will be given in the following.

WO 2005/043739 by Piezomotor Uppsala AB, describes a translational type motor that generates a translational or linear movement by a peristaltic electromechanical (piezo-electric) actuating element arranged against a body. The actuating element is built of sections of piezo-electric elements arranged for selectively causing a dimension change in a direction of motion within a limited section of the actuating element. By changing voltage signals activating the limited section, the limited section is caused to move along the actuating element, thereby displacing the body relative to the actuating element, thus generating a translational or linear movement.

US 6,940,209 by New Scale Technologies, describes a motor for driving a threaded shaft engaged with a threaded nut. A piezo-electric element is used to generate ultrasonic vibrations (i.e. with a frequency of 20 kHz or greater) and subject the nut to the ultrasonic vibrations. Thereby the nut causes the threaded shaft to simultaneously rotate and translate in its axial direction through the nut.

US 6,437,485 by Piezomotor Uppsala AB, describes different types of piezo-eledric motors based on displacement elements with two piezo-electric elements interconnected by a passive part. Each of the two piezo-electric elements includes a bimorph, where the active volumes extend in parallel out from the passive part. Rotational and translational embodiments are disclosed based on such displacement elements.

EP 1 520 338 by Elliptec Resonant Actuator AG, describes a piezo-electric motor with a piezo-electric element connected to a vibrating member with a tip performing a repeated elliptical movement, this elliptical movement of the tip being capable of transferring mechanical energy via friction to e.g. a wheel, a rod etc.. Embodiments with use of this type of piezo-electric motor will be described in the following.

Fig. 2 illustrates a preferred electric consumption meter 10 with a measuring device 11 connected on a power line 20 so as to measure an amount of electric energy supplied from a provider to a consumer. The meter 10 has a casing 14 in which the measuring device 11 is mounted. The meter 10 further has a switch device 12 mounted inside Its casing 14, e.g. as the switch device embodiment 1 described in connection with Fig. 1. The meter 10 further has a wireless RF communication module 13 serving to receive a control signal CS and connected to the switch device 12 such that the provider can send remotely send the control signal CS and thus cause the switch 12 to disconnect the power line to the consumer. The communication module 13 may further serve to wirelessly RF transmit a measured amount of consumed electric energy and/or other information stored in the meter. In the illustrated embodiment, the meter 10 has the communication module 13 mounted within its casing 14.

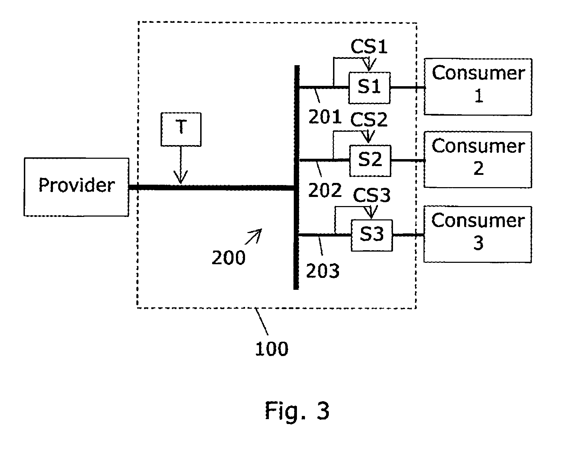

Fig. 3 Illustrates an electric supply system 100 for supply or distribution of electric energy to a number of consumers 1, 2 and 3 from a provider 1 via a net 200 of electric power lines 201, 202, 203. The system 100 Includes a switch device S1, S2, S3 mounted on power lines supplying electric energy to each of the consumers 1, 2 and 3. S1, S2 and S3 can each disconnect more phases and/or a neutral conductor. The switch devices S1, S2, S3 can be individually controlled via respective control signals CS1, CS2, CS3 thus enabling the provider to disconnect the electric energy supply to the consumers 1, 2, and 3 independently. In the illustrated embodiment, the control signals CS1, CS2, CS3 are sent from a remotely located transmitter T connected to the supply net 200, while the switch devices S1, S2, S3 are connected to receive the control signals CS1, CS2, CS3 from the power lines 201, 202, 203, e.g. in form of RF signals overlaid the supply power voltage. The provider may access the individual switches using control signals CS1, CS2, CS3 with individual codes for accessing the corresponding switch device S1, S2, S3.

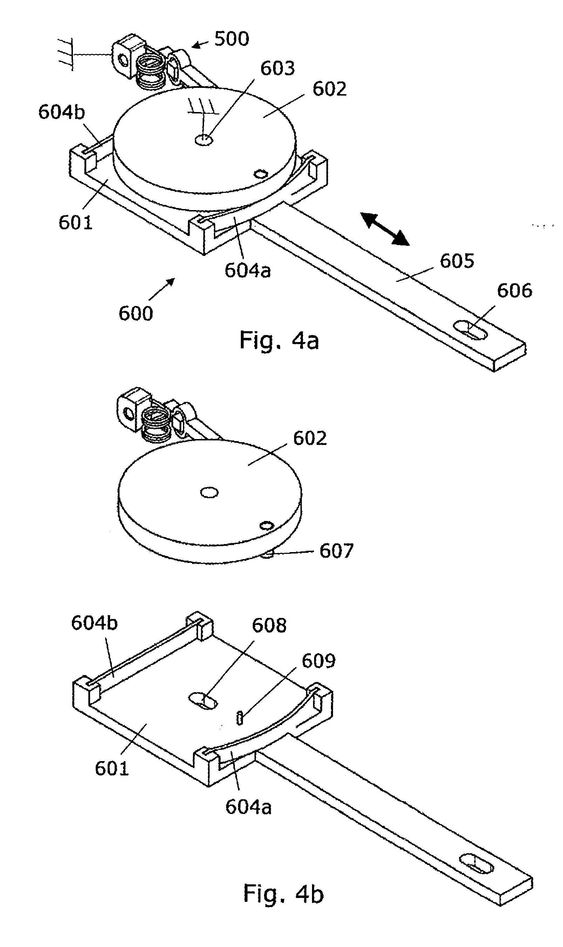

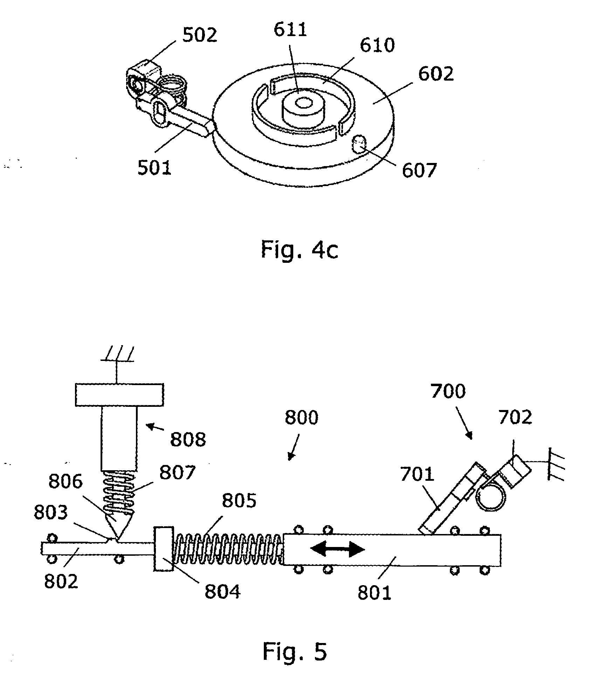

Figs. 4a, 4b and 4c illustrate different views of parts of an embodiment where a piezo-electric motor 500, the one from Elliptec Resonant Actuator AG mentioned above, provides an elliptic type of rotational motion, and a combined energy collecting and motional converter mechanism 600 for providing a translational movement in the directions Indicated by the bold bi-directional arrow so as to engage with a switch member of a power switch (not shown). In Fig. 4a the selected parts of motor 500 and mechanism 600 are shown in an assembled state, while Fig. 4b illustrates the parts dismantled. Fig. 4c shows a different view of one selected part to show details of the mechanism which are hidden on the view shown in Figs. 4a and 4b.

Referring to Figs. 4a, 4b and 4c the function of the embodiment will now be described. A piezo-electric motor element 500 produces mechanical energy by motion of a moving member 501 relative to a fixed part 502 that is Intended for attachment to a fixed part (not shown) of the switch device. The basic function principle is that the piezo-electric motor 500 engages with a mechanical coupling arrangement 600 such that it moves a movable member including a base part 601 and a rod 605 with a hole 606 for attachment to a not shown switch member of a power switch. The mechanical coupling arrangement 600 converts a rotational movement of a disc member 602 to a bi-directional movement of the movable member 601, 605, while mechanical energy is collected in blade springs 604a, 604b and released so as to provide a snap movement of the movable member 601, 605 in response to the mechanical energy produced by the piezo-electric motor 500.

During function, the moving member 501 performs a vibrating movement and engages with an outer surface of a disc member 602 rotationally mounted with an axle 603, such that the moving member 501 causes the disc member 602 to rotate around axle 603 which is fixed to the not shown fixed part of the switch device. The tip of the moving member 501 of the motor 500 performs a repeated, small elliptic movements, and in preferred embodiments each repeated movement only contributes to a small angular movement of the disc member 602 such that more than 100.000 repeated movements are involved to switch state of the switch.

The motor 500 may be electrically controllable such that it is possible to rotate the disc member 602 both clockwise and anti-clockwise. However, the mechanical coupling arrangement 600 is adapted to move the movable member 601, 605 forth and back for each full rotation of the disc member 602, and thus on/off switching Is possible with only one moving direction of the motor 500. A variety of piezo-electric motors, such as the shown motor 500, are commercially available together with a dedicated control circuit, and therefore the motor 500 will not be further described in details. In case of other types of motors, e.g. motors providing a rotation around an axle, mechanical energy may be transferred instead via a toothed wheel mechanism to the disc member 602.

The axle 603 goes through a hole 608 in the base part 601, the hole 606 being shaped such as to fix the movable part 601, 605 relative to the disc member 602 in a direction perpendicular to the moving direction indicated by the bi-directional bold arrow. In a direction along the moving direction, the hole 608 is shaped such as to allow the moving part 601, 605 to move relative to the disc member 602 in the moving direction.

Two blade springs 604a, 604b are fixed to the base part 601 opposite each other such that they, in turn, are engaged by a spring engaging pin 607 on one side of the disc member 602, as the disc member 602 rotates. Thereby the blade springs 604a, 604b serve to collect mechanical energy during at least part of the rotational movement. In Figs. 4a and 4b the device is illustrated in a position of the disc member 602 where blade spring 604a bent and thus in a state where a maximum of mechanical energy Is stored therein due to bending. In this position, the movable member 601, 605 is kept in a fixed position relative to the disc member 602 in the movable direction via a protruding pin 609 mounted on the base part 601, the pin 609 engaging with a circular protrusion 610 on the disc member 602. The circular protrusion 601 has two openings corresponding to the circular position of the spring engaging pin 607 and 180° opposite thereto, the openings being shaped to allow the pin 609 to pass the circular protrusion 610 and thereby release the movable member 601, 605 to move in the movable direction relative to the disc member 602. Since this release coincides with a maximum tension of one of the blade springs 604a, 604b caused by the angular position of the spring engaging pin 607, the movable member 601, 605 will be released in a snap-like manner and thus perform a fast movement in one of the movable directions. The displacement of the movement is determined by the length of the hole 608 in the movable direction, among other parameters. Preferably, such displacement is arranged such that is allows contact members in the power switch to have a mutual distance of at least 1-3 mm in the off position, and thus the actual displacement of the rod 605 should be suited to provide this distance, either by engaging with a switch member of the switch being in direct contact with one contact member, such as the rod 605 directly engaging with one movable contact member of the switch.

In the angular position of the disc member 602 shown in Figs. 4a and 4b, the release will occur once the disc member 602 is rotated slightly clockwise. If further rotated, a movement of the movable member 601, 605 will be released in the opposite direction after yet another 180° of rotation, since spring engaging pin 607 has then built up mechanical energy due to bending of blade spring 604b.

The spring engaging function of pin 607 can alternatively be obtained by a circular protrusion on the disc member 602 in the same manner as protrusion 610. Such circular protrusion preferably has a varying thickness with a maximum corresponding to the angular position of pin 607. With a gradual varying thickness instead of pin 607, it is possible to provide a more gradual engaging of the spring 604a, 604b during a large part of a full rotation, and thereby provide a more steady varying load of the motor 500 during a full rotation of the disc member. Further, with the pin 607 replaced by a circular protrusion, It Is possible to form all of parts 602, 610, 611 and 607 by one monolithic body.

The not shown fixed part of the switch device may be a separate casing around the switch device, or this fixed part may be formed by a part of another device, e.g. a casing or another part of an electric consumption meter. It is appreciated that the basic function of the arrangement shown in Figs. 4a-4c can be obtained with a larger variety of Implementation configurations, e.g. the disc member 602 may have a different shape than circular, e.g. elliptical, so as to provide a build up of mechanical energy in the blade springs 604a, 605b on a larger angular part of the rotation than with the shown circular shape, thus allowing a weaker motor 500 to deliver the necessary mechanical energy.

The movable parts 601, 605 may be formed by a polymeric material or a metal, however other types of materials can be used, e.g. glass or ceramic materials. The blade springs 604a, 604b, the pins 607 and 609 and axle 603 are preferably formed by metal, while the disc member 602 is preferably formed by a polymeric material but it may alternatively be formed by metal, e.g. aluminium. It may be preferred to form all of or at least most of the parts in electrically non-conducting materials, especially in case the parts are located near the electric high voltage conductors or neutral.

Fig. 5 illustrates another mechanical coupling arrangement 800 activated by a piezo-electric motor 700. The piezo-electric motor 700 may in principle be the same type as the motor 500 illustrated in Fig. 4, however in the configuration illustrated in Fig. 5 the motor 700 has a moving member 701 engaging with an engager rod 801 causing the engager rod 801 to perform a translational or linear movement in a movable direction indicated by the bi-directional bold arrow.

A fixed part 702 of the motor 700 is fixed to a not shown fixed part of the switch device. The small circles indicate bearings that are also understood to be fixed to a not shown fixed part of the switch device and these bearings serve to fix movements of the engager rod 801 and an actuating rod 802 in the movable direction. The actuating rod 802 is Intended for engaging contact members of the switch, either directly or via a switch member. A helical engager spring 805 serves to collect mechanical energy as the motor 700 causes the engager rod 801 to move, since the engager spring 805 is fixed to the engager rod 801 in one end and to a part 804 fixed to the actuating rod 802 in its opposite end. In the shown embodiment the engager spring 805 extends around one end of the actuating rod 802, and this end of the actuating rod 802 extends inside the helical spring and to a hollow inner part of the engager rod 801.

To provide a sudden release of the actuating rod 802, a release mechanism is provided that serves to engage with a protrusion 803 on the actuating rod 802. A release pin 806 is fixed to one end of a helical release spring 807. The opposite end of the release spring 807 is fixed to a part 808 mounted fixed to a not shown part of the switch device. In the illustrated embodiment, the release pin 806 is movable in a direction perpendicular to the movable direction of the actuating rod 802. Since the release pin 806 is forced towards the actuating rod 802 due to a compression of the release spring 807, the protrusion 803 serves to lock the actuating rod 802 in a fixed position until the mechanical energy collected by the engager spring 805 exceeds the force required for the protrusion 803 to pass the release pin 806 and thereby further compress the release spring 807. As this force is exceeded, the protrusion 803 passes the release pin 806 and hence the actuating rod is released and will be forced in the movable direction by the energy stored in the engager spring 805. Thus, a snap-like release of the actuating rod 802 is provided which can be driven by a rather weak piezo-electrlc motor 700 only capable of slowly building up mechanical energy in the engager spring 805 via engagement of the engager rod 801.

In the position of the arrangement 800 illustrated in Fig. 5, mechanical energy is stored in the engager spring 805 by extension as the motor 700 moves the engager rod 801 towards the right. The protrusion 803 is in contact with the release pin 806 that serves to lock the actuating rod 802 in position until enough mechanical energy is stored in the engager spring 805 to allow the protrusion 803 to press the release pin 806 upwards thus releasing the actuating rod 802 that will then perform a fast movement to the right.

In contrast to the embodiment of Figs. 4a-4c, the embodiment of Fig. 5 requires the motor 700 to change direction in order to change direction of the actuating rod 802 and thus change the switch from on to off an vice versa. The materials used to form the various parts of the arrangement 800 may be polymeric materials, metal or other materials such as described for the embodiment of Fig. 4. The springs 805, 807 are preferably formed by metal as well as the actuating rod 802. As described for the embodiment of Fig. 4, the embodiment of Fig. 5 can be mounted either to a separate casing around the switch device, or the parts that need to be fixed may be fixed to a part of another device, e.g. a casing or another part of an electric consumption meter.

For both embodiments shown in Figs. 4 and 5, the possible external influence by a strong magnet is small even though magnetic materials are used for some of the parts, e.g. the springs. The reason is that the use of the piezo-electric motors 500, 700 to produce mechanical energy and the effect of these motors 500, 700 can be made totally immune to magnetic fields. The total function of the arrangements illustrated in Figs. 4 and 5 is only very slightly Influenced even by a strong external magnet even though some of the parts are formed by magnetic materials. The reason is that the energy storing and release mechanisms serve to convert small movements of the single moving parts to a sudden release that will easily overcome an external force applied to them by a strong external magnet.

To sum up: the invention provides a power line switch device (1) for disconnecting an electric power line (2) in response to a control signal (CS), e.g. to enable remote breaking of electric power supply to a consumer connected to an electric supply net. The switch device (1) includes a power switch for connecting or breaking connection of an electric power line. A switch member serving to switch the power switch between "on" and "off" is actuated by a piezo-electric motor (5) in response to the control signal (CS). A piezo-electric motor can be implemented immune to magnetic fields and is thus suited to provide mechanical energy to reliably drive a power switch in an environment where application of a strong magnetic field may be used to disturb the function of such switch. In preferred embodiments the piezo-electric motor actuates the switch member via a mechanical coupling arrangement (7). This arrangement (7) serves to convert a slow movement provided by the piezo-electric motor (5) to a snap-fike movement of the switch member such that contact members (8, 9) are quickly brought in or our of contact thereby eliminating sparks between the contact members (8, 9). Preferably the actuation of the switch member (4) involves a plurality of repeated movements of the piezo-electric motor (5).

Although the present invention has been described in connection with the specified embodiments, it is not intended to be limited to the specific form set forth herein. Rather, the scope of the present invention is limited only by the accompanying claims. In the claims, the term "comprising" or "including" does not exclude the presence of other elements. Additionally, although Individual features may be Included in different claims, these may possibly be advantageously combined, and the inclusion in different claims does not imply that a combination of features is not feasible and/or advantageous. In addition, singular references do not exclude a plurality. Thus, references to "a", "an", "first", "second" etc. do not preclude a plurality. Furthermore, reference signs in the claims shall not be construed as limiting the scope.

## Claims

1. A power line switch device (1) for disconnecting an electric power line (2) in response to a control signal (CS), the device comprising
- a switch (3) arranged for connecting the electric power line (2) in a first state and for disconnecting the electric power line (2) in a second state, wherein the switch (3) is arranged to switch between the first and second states upon actuation of a switch member (4), and
- a piezo-electric motor (5) operationally arranged to actuate the switch member (4) in response to the control signal (CS).

2. Device (1) according to claim 1, further including a drive circuit (6) arranged to generate a drive signal to drive the piezo-electric motor (5) in response to the control signal (CS).

3. Device (1) according to claim 2, wherein the drive circuit (6) is arranged to provide a drive signal including an AC signal.

4. Device (1) according to claim 3, wherein a direction of movement of the piezo-electric motor (5) is controlled in response to at least one of: phase of the AC signal and frequency of the AC signal.

5. Device (1) according to any of claims 2-4, wherein the drive signal has an amplitude of less than 25 V, preferably less than 10V.

6. Device (1) according to any of claims 2-5, wherein the piezo-electric motor (5) includes at least two piezo-electric elements, and wherein the drive circuit (6) is arranged to provide separate drive signals to the at least two piezo-electric elements.

7. Device (1) according to claim 6, wherein the piezo-electric motor (5) Includes at least two groups each including a plurality of piezo-electric elements, and wherein the drive circuit (6) is arranged to provide separate drive signals to the at least two groups of piezo-electric elements.

8. Device (1) according to any of the preceding claims, wherein piezo-electric motor (5) provides a rotational motion.

9. Device (1) according to any of claims 1-7, wherein the piezo-electric motor (5) provides a translational motion.

10. Device (1) according to any of claim 8 or 9, wherein the piezo-electric motor (5) provides a combined translational and rotational movement.

11. Device (1) according to any of the preceding claims, piezo-electric motor (5) is mechanically arranged in relation to the switch member (4) such that actuation of the switch member (4) involves a plurality of repeated movements of at least one part of the device.

12. Device (1) according to claim 11, wherein actuation of the switch member (4) involves at least one part of the piezo-electric motor (5) performing a plurality of repeated movements.

13. Device (1) according to any of the preceding claims, wherein the piezo-electric motor (5) is arranged to actuate the switch member (4) via a mechanical coupling arrangement (7) serving to convert a motion generated by the piezo-electric motor (5) to a movement of the switch member (4).

14. Device (1) according to claim 13, wherein the mechanical coupling arrangement (7) serves to convert a movement generated by the piezo-electric motor (5) to move the switch member (4) faster than the movement generated by the piezo-electric motor (5).

15. Device (1) according to claim 14, wherein the mechanical coupling arrangement (7) includes a mechanical energy storage arrangement serving to collect mechanical energy produced by the piezo-electric motor (5) and to the release the collected mechanical energy so as to provide a fast actuation of the switch member (4).

16. Device (1) according to claim 15, wherein the energy storage arrangement Includes a spring.

17. Device (1) according to any of the preceding claims, wherein contact members (8, 9) in the switch (3) are arranged to have a mutual distance of at least 0.3mm in the second state, preferably at least 1 mm.

18. Device (1) according to any of the preceding claims, wherein the switch (3) is Implemented by non-magnetic materials.

19. Device (1) according to any of the preceding claims, wherein the piezo-electric motor (5) is capable of moving in two directions.

20. Device (1) according to claim 19, wherein the piezo-electric motor (5) is capable of actuating the switch member (4) in a first movement direction so as to switch from the first state to the second state, and further capable of actuating the switch member (4) in a second movement direction so as to switch from the second state to the first state.

21. Device (1) according to any of the preceding claims, arranged to disconnect a plurality of electric phases of the power line (2) in response to the control signal (CS).

22. Device (1) according to claim 21, including a plurality of switches (3) arranged to disconnect respective electric phases of the power line (2).

23. Device (1) according to claim 22, wherein the plurality of switches (3) are operated by one common piezo-electric motor (5).

24. Device (1) according to claim 22, wherein the plurality of switches (3) are operated by respective piezo-electric motors (5).

25. Device (1) according to any of claims 21-24, further arranged to disconnect a neutral conductor of the power line (2) in response to the control signal (CS).

26. Device (1) according to any of the preceding claims, further comprising a communication module (13) arranged to receive the control signal (CS) from an associated external transmitter.

27. Device (1) according to claim 26, wherein the communication module (13) includes a wireless Radio Frequency receiver arranged to receive the control signal (CS) in a wireless representation.

28. Device (1) according to claim 26, wherein the communication module (13) is arranged to receive the control signal (CS) via the electric power line (2).

29. Device (1) according to any of claims 2-28, wherein a feedback signal (FS) representative of the state of the switch (3) is provided to the drive circuit (6).

30. An electric consumption meter (10) for measuring an amount of electrical energy delivered by an electric power line (20), the meter (10) comprising
- a measuring device (11) arranged to measure the amount of electric energy delivered by the electric power line (20) and generate an according data value representing the amount of electric energy, and
- a power line switch device (12) according to any of the preceding claims.

31. Meter (10) according to claim 30, further comprising a casing (14) for housing the measuring device (11) and the power line switch device (12).

32. Meter (10) according to claim 30 or 31, further comprising a power supply delivering electric power for operation of the measuring device (11) and the power line switch device (12).

33. Meter (10) according to any of claims 30-32, further comprising a communication module (13) arranged to receive the control signal (CS) from an associated external transmitter.

34. Meter (10) according to claim 33, wherein the communication module (13) includes a wireless Radio Frequency receiver.

35. Meter (10) according to claim 34, wherein the communication module (13) further includes a wireless Radio Frequency transmitter arranged to transmit the data value representing the amount of electric energy.

36. Meter (10) according to any of claims 30-35, wherein the measuring device (11) Is arranged to measure a total amount of electric energy delivered by two or more electric phases of the power line (20), and wherein the power line switch device (12) is arranged to disconnect the two or more electric phases of the power line (20) in response to the control signal (CS).

37. Supply system (100) for supply of electric energy to a plurality of associated consumers via a net (200) of electric power lines (201, 202, 203), the system including
- a plurality of power line switch devices (S1, S2, S3) according to any of claims 1-21 arranged to disconnect respective electric power lines (201, 202, 203) supplying electric energy to each of the associated consumers upon receiving respective control signals (CS1, CS2, CS3), and
- a transmitter (T) arranged to transmit respective control signals (CS1, C52, CS3) to the plurality of power line switch devices (S1, S2, S3) so as to disconnect electric energy supply to the respective associated consumers.

38. System (100) according to claim 37, wherein the transmitter (T) is arranged to transmit the respective control signals (CS1, CS2, CS3) in a wireless Radio Frequency representation, and wherein the plurality of power line switch devices (S1, S2, S3) include communication modules arranged to receive the respective control signals (CS1, CS2, CS3) in the wireless Radio Frequency representation.

39. System (100) according to claim 37 or 38, wherein the transmitter is arranged to transmit the respective control signals (CS1, CS2, CS3) via the net (200) of electric power lines (201, 202, 203), and wherein the plurality of power line switch devices (S1, S2, S3) include communication modules arranged to receive the respective control signals (CS1, CS2, CS3) via the net (200) of electric power lines (201, 202, 203).

40. System (100) according to any of claims 37-39, including a plurality of electric consumption meters according to any of claims 29-35.
